# EUROPEAN PATENT APPLICATION

(11) **EP 4 397 886 A1**
(43) Date of publication of application: **10.07.2024**
(21) Application number: 21955945.7
(22) Date of filing: 31.08.2021
(51) Int. Cl.: F16H 1/32

(54) **STRAIN WAVE GEAR DEVICE**

(71) Applicant: Harmonic Drive Systems Inc., Shinagawa-ku Tokyo 140-0013 (JP)
(72) Inventor: KOBAYASHI, Masaru, Azumino-shi, Nagano 399-8305 (JP)
(74) Representative: TBK
(86) International application number: PCT/JP2021/032014
(87) International publication number: WO 2023/032055

(57) **Abstract**

A strain wave gearing (1) is provided with: a rigid internally toothed gear (2); a flexible externally toothed gear (3) that is arranged coaxially on the inside of the internally toothed gear (2); and a wave generator (4) that is arranged coaxially on the inside of the externally toothed gear (3), and, on the inside of the externally toothed gear (3), in addition to the wave generator (4), a brake mechanism (5) that constrains or prevents the rotation of the wave generator (4) is installed. Since the empty space on the inside of the external gear (3) is used as a space for installing the brake mechanism (5), the strain wave gearing (1) with a brake can be realized without increasing the axial length thereof. Accordingly, by using the strain wave gearing (1), an axially short, flat actuator with a brake can be realized.

## Description

### TECHNICAL FIELD

The present invention relates to a strain wave gearing, and in particular relates to a strain wave gearing that is suited, in combination with a motor, to constructing an actuator equipped with a short-axial-length brake.

### BACKGROUND ART

Actuators in which strain wave gearings are used are typically configured such that a motor, a brake, a detector, and a strain wave gearing are arranged in an axial direction. For example, as disclosed in Patent Documents 1 and 2, an actuator is configured such that a strain wave gearing is disposed on a load side, and a brake and a detection unit are disposed on a counter-load side, so as to sandwich a motor. In Patent Documents 1 and 2, an electromagnetic brake is used as the brake, but other types of brakes, such as MR fluid brakes or other fluid brakes, are also known as brakes that can be used (for example, see the brakes disclosed in Patent Documents 3 and 4).

### PRIOR-ART DOCUMENT

### PATENT DOCUMENT

Patent DOCUMENT 1: JP 2020-205742 A
Patent DOCUMENT 2: JP 2008-115896 A
Patent DOCUMENT 3: JP 2009-264544 A
Patent Document 4: JP 2005-207544 A

### DISCLOSURE OF THE INVENTION

### PROBLEMS TO BE SOLVED BY THE INVENTION

In an actuator, employing a strain wave gearing, a motor, a brake, or other structures that are linked in the axial direction increases the axial length of the actuator. It is difficult to keep the axial length of the actuator from increasing so as to achieve a flatter profile.

It is an object of the present invention to provide a strain wave gearing that is suited to keeping the axial length of an actuator equipped with a brake from increasing so as to achieve a flatter profile.

### MEANS OF SOLVING THE PROBLEMS

The strain wave gearing according to the present invention is provided with a rigid internally toothed gear, a flexible externally toothed gear that is coaxially disposed inside the internally toothed gear, and a wave generator coaxially disposed inside the externally toothed gear, the strain wave gearing being characterized by comprising a brake mechanism that is incorporated inside the externally toothed gear in addition to the wave generator, the brake mechanism constraining or preventing rotation of the wave generator.

Because an empty space inside the externally toothed gear is used as a space for installing the brake mechanism, a strain wave gearing comprising a brake can be realized without increasing the axial length of the strain wave gearing. Thus, using the above-described strain wave gearing makes it possible to keep the axial length of an actuator equipped with a brake from increasing so as to achieve a flatter profile.

### BRIEF DESCRIPTION OF THE DRAWINGS

FIG. 1A is a schematic configurational view showing an example of a cup-shaped strain wave gearing to which the present invention is applied;
FIG. 1B is a diagram showing a state in which an externally toothed gear meshes with an internally toothed gear in the strain wave gearing;
FIG. 2A is a diagram showing an example of a splined slide guide part in a brake mechanism;
FIG. 2B is a diagram showing an example of the splined slide guide part in the brake mechanism;
FIG. 2C is a diagram showing an example of the splined slide guide part in the brake mechanism;
FIG. 3A is a diagram showing another example of a slide guide part in the brake mechanism;
FIG. 3B is a diagram showing yet another example of a slide guide part in the brake mechanism;
FIG. 4A is a schematic longitudinal cross-sectional view showing a strain wave gearing in which an MR fluid brake mechanism is incorporated as the brake mechanism; and
FIG. 4B is a schematic longitudinal cross-sectional view showing a strain wave gearing in which an MR fluid brake mechanism is incorporated as the brake mechanism.

### MODE FOR CARRYING OUT THE INVENTION

Embodiments of a strain wave gearing to which the present invention is applied are described below with reference to the accompanying drawings. The embodiments illustrate cases in which the present invention is applied to cup-shaped strain wave gearings, but the present invention can also be applied to top-hat-shaped strain wave gearings in a similar manner. The present invention can additionally be applied to pancake-shaped strain wave gearings comprising two internally toothed gears and a cylindrical flexible externally toothed gear.

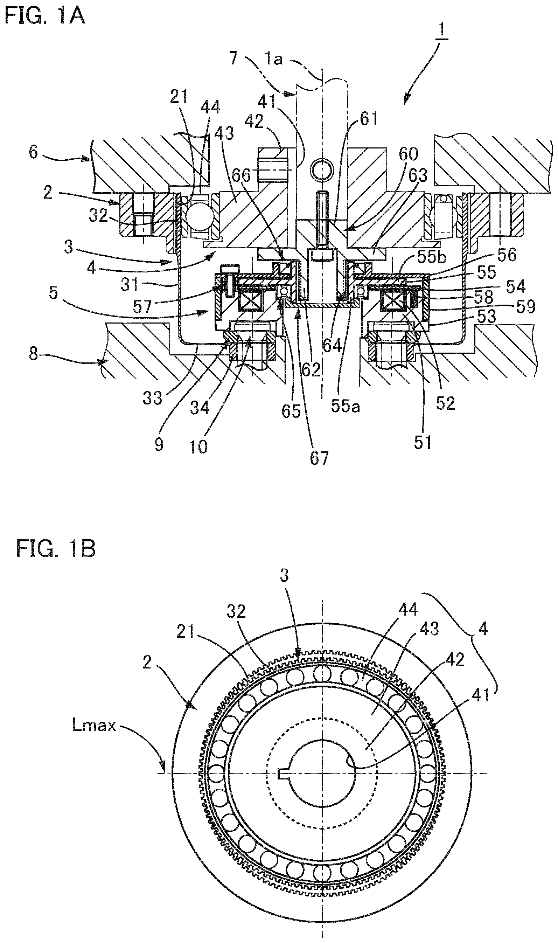

The present invention shall now be described with reference to FIGS. 1A and 1B. The strain wave gearing 1 comprises an annular rigid internally toothed gear 2, a cup-shaped flexible externally toothed gear 3 that is coaxially disposed inside the internally toothed gear 2, a wave generator 4 that is coaxially mounted inside the externally toothed gear 3, and a brake mechanism 5 that is incorporated inside the externally toothed gear 3. For example: the internally toothed gear 2 is fixed to a device housing 6; the wave generator 4 is coaxially linked to a motor shaft 7, the wave generator 4 serving as an input-side member to which high-speed rotation is inputted; and the externally toothed gear 3 has a disc-shaped output shaft 8 coaxially linked thereto, the externally toothed gear 3 serving as an output-side member from which reduced rotation is outputted. The brake mechanism 5 is attached to the externally toothed gear 3, the brake mechanism 5 applying, to the wave generator 4, braking force for constraining or stopping rotation of the wave generator 4.

The externally toothed gear 3 is provided with a cylindrical barrel part 31 that is capable of flexing in a radial direction, external teeth 32 that are formed on the open-end-side outer peripheral surface portion of the cylindrical barrel part 31, a diaphragm 33 that extends radially inward from the opposite-side end of the cylindrical barrel part 31, and an annular rigid boss 34 that is connected to the inner peripheral edge of the diaphragm 33. The externally toothed gear 3 is coaxially mounted inside the internally toothed gear 2, and the external teeth 32 face internal teeth 21 of the internally toothed gear 2 from the radially inner side. The boss 34 is sandwiched between the output shaft 8 and an annular pressing member 9, these three members being securely fastened by a plurality of fastening bolts 10.

The wave generator 4 is provided with a hollow input shaft section 42 that is provided with a shaft hole 41, a rigid plug 43 of uniform width that is provided with an ellipsoidal outer peripheral surface and is formed integrally with the cylindrical outer peripheral surface of the input shaft section 42, and a wave bearing 44 that is mounted on the ellipsoidal outer peripheral surface of the plug 43. A motor shaft 7 is inserted into the shaft hole 41 in the input shaft 42 of the wave generator 4 and fixed to the wave generator 4. The wave bearing 44, which is mounted on the plug 43 and is caused to flex into an ellipsoidal shape, causes the portion of the cylindrical barrel part 31 where the external teeth 32 are formed on the externally toothed gear 3 to flex into an ellipsoidal shape. The external teeth 32 that are positioned at both end portions on a long axis Lmax of the ellipsoidal shape mesh with the internal teeth 21 of the internally toothed gear 2.

When the wave generator 4 is caused to rotate at high speed by the motor shaft 7, the positions where the externally toothed gear 3 meshes with the internally toothed gear 2 move in the circumferential direction of the internally toothed gear 2. The externally toothed gear 3 has 2n fewer teeth than the internally toothed gear 2 (where n is a positive integer). In the present example, because the internally toothed gear 2 is fixed, the externally toothed gear 3 rotates at a reduced speed in association with rotation of the wave generator 4. The reduced rotation of the externally toothed gear 3 is outputted to the load side from the output shaft 8, which is linked to the boss 34 of the externally toothed gear 3.

The brake mechanism 5 is incorporated within an internal space in the cylindrical barrel part 31 of the externally toothed gear 3 at a location between the wave generator 4 and the diaphragm 33 and boss 34. The brake mechanism 5 is, for example, a power-off activated type electromagnetic brake. In the brake mechanism 5, an electromagnet part 53 that is provided with a yoke 51 and an excitation coil 52, an armature disc 54 that can be attracted by the electromagnet part 53, and a friction disc 55 and a fixed disc 56 that are rotating discs are disposed along the direction of an axis 1a from the boss 34 side toward the plug 43. The armature disc 54 is capable of sliding in the direction of the axis 1a along a guide pin 57. A spring member 58 is disposed between the electromagnet part 53 and the armature disc 54. The armature disc 54 is pressed toward the friction disc 55 by the spring member 58.

The brake mechanism 5 is also provided with a rotating shaft 60 that is coaxially fixed to the plug 43 of the wave generator 4. The friction disc 55 is attached to the outer peripheral surface of the rotating shaft 60 so as to be capable of sliding in the direction of the axis 1a and so as to rotate integrally with the rotating shaft 60. In the present example, the friction disc 55 is provided with a cylindrical boss 55a and a disc body part 55b that is formed integrally with the outer peripheral surface of the cylindrical boss 55a, and the inner peripheral surface of the cylindrical boss 55a is supported on the outer peripheral surface of the rotating shaft 60 via a splined slide guide part 64.

The friction disc 55 is pressed toward the fixed disc 56 by the armature disc 54, which is biased by the spring member 58. Frictional force between the friction disc 55 and the fixed disc 56 acts as braking force on the rotating shaft 60, which is fixed to the plug 43. When the electromagnet part 53 is excited, the armature disc 54 is attracted toward the electromagnet part 53 against the spring force, the friction disc 55 is released from the fixed disc 56, and the braking force applied to the rotating shaft 60 is canceled.

This feature shall now be described in greater detail. The yoke 51 of the electromagnet part 53 of the brake mechanism 5 is formed in a cylindrical shape having a prescribed thickness and is coaxially fixed to the boss 34 of the externally toothed gear 3 by fastening bolts or other fastening fixtures (not shown), with the pressing member 9 interposed therebetween. A cylindrical case 59 is coaxially fixed to the outer peripheral section of the yoke 51, and the fixed disc 56 is coaxially fixed to an open end of the cylindrical case 59.

The rotating shaft 60 is provided with an insertion shaft section 61 that is inserted into the shaft hole 41 in the plug 43 of the wave generator 4, a hollow shaft section 62 that is provided with an outer peripheral surface by which the friction disc 55 is supported, and a large-diameter flange 63 that is formed between the insertion shaft section 61 and the hollow shaft section 62. The hollow shaft section 62 is a spline shaft having splines formed on the outer peripheral surface thereof, the hollow shaft section 62 being inserted into the inner peripheral surface of the cylindrical boss 55a of the friction disc 55, in which spline grooves are formed. Thus, the friction disc 55 is linked to the hollow shaft section 62 of the rotating shaft 60 via the splined slide guide part 64 so as to rotate integrally with the rotating shaft 60 in a state of being capable of sliding in the direction of the axis 1a. Additionally, the outer peripheral surface of the cylindrical boss 55a of the friction disc 55 is supported by an inner peripheral end section of the electromagnet part 53 via a bearing 65.

A space between the fixed disc 56 of the electromagnet part 53 and the cylindrical boss 55a of the friction disc 55 is sealed by an oil seal 66 (sealing member). The splined slide guide part 64, which is located between the friction disc 55 and the rotating shaft 60 and which is exposed on the side where the boss 34 of the externally toothed gear 3 is located, is sealed by a sealing cap 67 that is attached to the end surface of the cylindrical boss 55a of the friction disc 55. The oil seal 66 and the sealing cap 67 (sealing members) prevent a lubricant that fills or is supplied to the strain wave gearing 1 from entering the splined slide guide part 64 or the space between the friction disc 55 and the fixed disc 56.

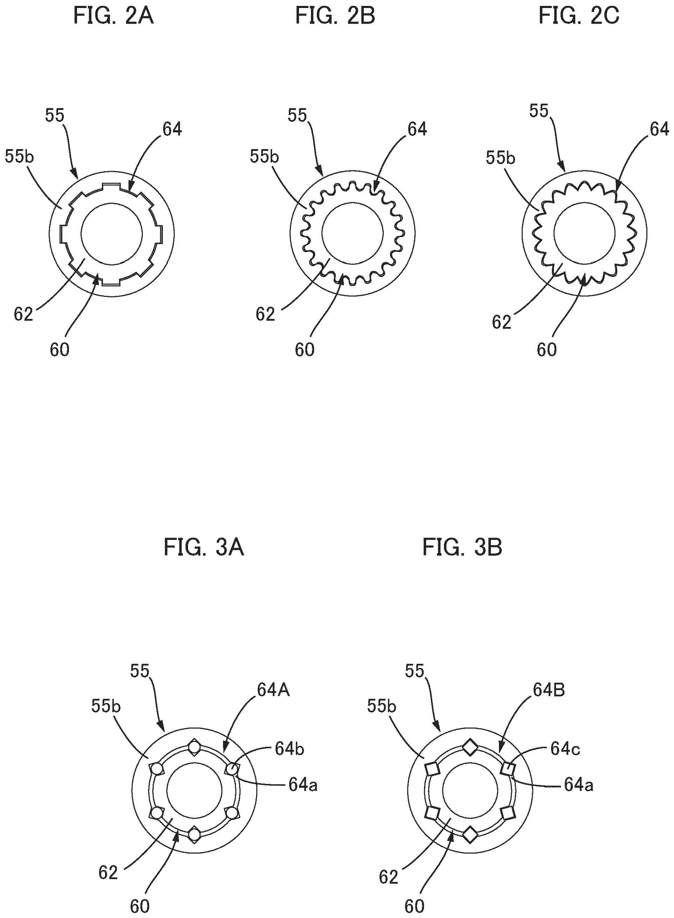

FIGS. 2A, 2B, and 2C show examples of the splined slide guide part 64, which is formed between the friction disc and the rotating shaft 60. A plurality of male-side splines and female-side splines that constitute the slide guide part 64 are formed at equiangular intervals in the circumferential direction, the male-side and female-side splines extending parallel to the axis. A variety of shapes can be employed for the cross-sectional shapes of the male-side and female-side splines, as shown in FIGS. 2A to 2C. The slide guide part 64 is preferably a mechanism that is linked to the rotating shaft 60 such that the friction disc 55 is capable of sliding in the direction of the axis 1a relative to the rotating shaft 60 and such that the friction disc 55 rotates integrally with the rotating shaft 60. The slide guide part 64 is not limited to a splined mechanism.

FIGS. 3A and 3B show examples of a slide guide part that is configured from rolling elements and splines, said slide guide part being usable in lieu of the splined slide guide part 64. In the slide guide part 64A shown in FIG. 3A, spline grooves (V grooves) that extend parallel to the axis are formed in the outer peripheral surface of the rotating shaft 60 and in the inner peripheral surface of the friction disc 55 at equiangular intervals in the circumferential direction. Rolling-element raceway grooves 64a of rectangular cross-section that extend in the axial direction are formed between the inner-peripheral-side spline grooves and the outer-peripheral-side spline grooves that face the inner-peripheral-side spline grooves. In the present example, six rolling-element raceway grooves 64a are formed. One or a plurality of balls 64b (rolling elements) are inserted into each of the rolling-element raceway grooves 64a. It is desirable for there to be three or more rolling-element raceway grooves 64a in the circumferential direction. In the slide guide part 64B shown in FIG. 3B, one or a plurality of rollers 64c serving as rolling elements are inserted into the rolling-element raceway grooves 64 of rectangular cross-section.

### (Other examples of brake mechanism)

An electric brake (power-on activated type or power-off activated type electromagnetic brake), a fluid brake, or other types of brakes can be used as the brake mechanism 5 that is disposed inside the externally toothed gear 3. For example, it is possible to use a magneto-rheological fluid (MR fluid) brake in which there is used an MR fluid that transitions from a liquid to a semisolid instantaneously upon application of a magnetic field. MR fluid brakes do not release abrasive powders or emit sound/vibration and have exceptional responsiveness/control properties.

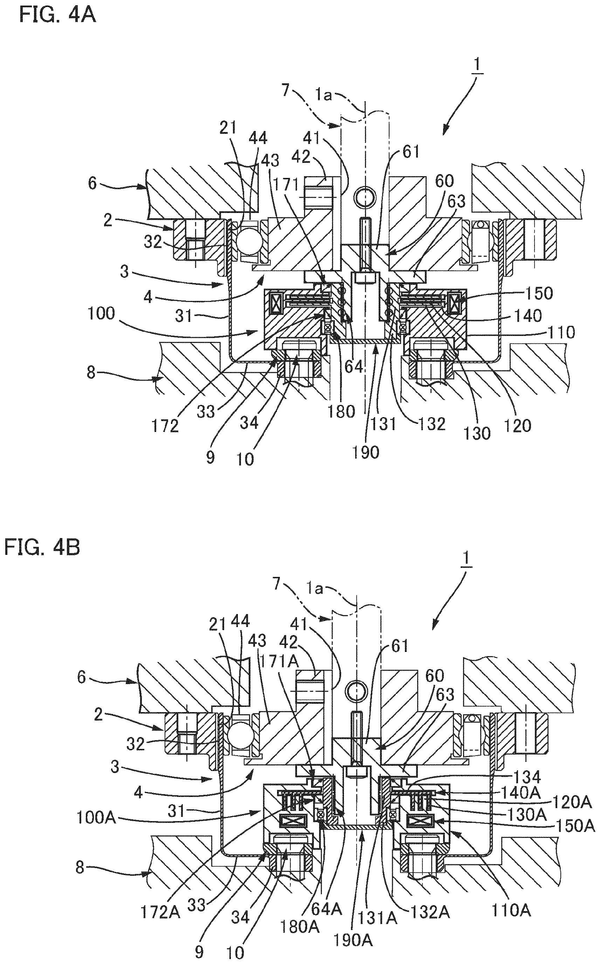

FIG. 4A is a schematic longitudinal cross-sectional view showing a case in which an MR fluid brake mechanism 100 is attached to the strain wave gearing 1 shown in FIG. 1A in lieu of the brake mechanism 5. The MR fluid brake mechanism 100 is provided with a brake case 110, a fixed disc 120 that is formed integrally with the brake case 110, a rotating disc 130 that is attached to the rotating shaft 60 so as to rotate integrally therewith, an MR fluid 140 that fills a gap formed between the fixed disc 120 and the rotating disc 130, and an electromagnet part 150 that is disposed inside the brake case 110 in order to excite the MR fluid 140.

The rotating disc 130 is a multilayer disc. In the present example, two rotating discs 130 are formed on the outer peripheral surface of a hollow shaft 131, the two rotating discs 130 being provided at a uniform interval in the axial direction. A uniform gap that is filled with the MR fluid 140 is formed between the fixed disc 120 of the brake case 110 and the rotating discs 130. Additionally, a uniform gap that is filled with the MR fluid 140 is also formed between the outer-side end surfaces of the two rotating discs 130 and the brake case 110. The electromagnet part 150 for exciting the MR fluid 140 is disposed on the outer-peripheral side of the rotating discs 130 inside the brake case 110.

The rotating shaft 60, which rotates integrally with the wave generator 4, is coaxially inserted into a hollow section within the hollow shaft 131 in the rotating discs 130. The hollow shaft 131 is linked to the rotating shaft 60 via the splined slide guide part 64. Therefore, the rotating discs 130 are attached to the rotating shaft 60 so as to be capable of sliding in the direction of the axis 1a and so as to rotate integrally with the rotating shaft 60. It is also possible to use the slide guide part 64A or 64B having a configuration in which rolling elements are inserted into a rolling-element raceway groove (refer to FIGS. 3A and 3B) in lieu of the slide guide part 64 (refer to FIGS. 2A, 2B, and 2C).

Spaces between the brake case 110 and portions on both axial-direction sides of the hollow shaft 131 of the rotating discs 130 are sealed by oil seals 171, 172. A shaft end section 132 of the hollow shaft 131 that is located on the side where the boss 34 of the externally toothed gear 3 is located is supported by the inner peripheral surface of the brake case 110 via a bearing 180. A sealing cap 190 is attached to the shaft end section 132 to seal the hollow section within the hollow shaft 131.

The MR fluid brake mechanism 100 is structured such that the fixed disc 120 and the rotating discs 130, which rotate integrally with a shaft to be braked, are disposed in an alternating manner and such that spaces between the fixed disc 120 and the rotating discs 130 are filled with the MR fluid 140. When the electromagnet part 150 is excited and a magnetic field is applied to the MR fluid 140, shear is generated between the fixed disc 120 and the rotating discs 130 as the MR fluid 140 transitions from a liquid to a semisolid, and the shear acts as braking force (resistance) on the rotating discs 130. In the MR fluid brake mechanism 100, the viscous friction of the disc surfaces is changed in association with changes in the magnetic field applied to the MR fluid 140, thereby making it possible to continuously control torque relative to a rotation action, this feature being suited for the brake mechanism of the strain wave gearing 1.

The total number of multilayer discs, features pertaining to the gaps, and the surface area of rotating parts are designed, as appropriate, in accordance with the coil performance and the MR fluid used. The dynamic viscosity for excitation of the (commercially available) MR fluid varies at 2.6-800 mm²/s (40°C), but it is desirable for the dynamic viscosity in an MR fluid brake mechanism that is used in a strain wave gearing to be 68 mm²/s or lower.

FIG. 4B shows a strain wave gearing 1 in which there is incorporated an MR fluid brake mechanism 100A having a different configuration than the MR fluid brake mechanism 100. The MR fluid brake mechanism 100A is provided with a fixed disc 120A that is formed integrally with a brake case 110A, a rotating disc 130A that is linked to the rotating shaft 60 via the slide guide part 64A, an MR fluid 140A that fills a gap formed between the fixed disc 120A and the rotating disc 130A, and an electromagnet part 150A that imparts a magnetic field to the MR fluid 140A.

The rotating disc 130A is configured such that three cylindrical discs are formed concentrically on a circular end surface of one disc 134 that extends in a radial direction, the disc 134 being formed on a hollow shaft 131A. The shape of the fixed disc 120A on the brake-case 110A side is set such that the fixed disc 120A faces the cylindrical discs across a uniform gap, the gap being filled with the MR fluid 140A. The electromagnet part 150A is disposed at such a position as to face the cylindrical discs from the direction of the axis 1a.

Spaces between the brake case 110A and portions on both axial-direction sides of the hollow shaft 131A of the rotating disc 130A are sealed by oil seals 171A, 172A. A shaft end section 132A of the hollow shaft 131A that is located on the side where the boss 34 of the externally toothed gear 3 is located is supported by the inner peripheral surface of the brake case 110A via a bearing 180A. A sealing cap 190A is attached to the shaft end section 132A to seal the hollow section within the hollow shaft 131A.

It is possible to use the laminated piezoelectric actuator that is proposed in JP-A 2009-264544 as the brake mechanism used in the present invention. Additionally, it is possible to use the small-sized compact brake mechanism that is proposed in JP 2005-207544 A, in which rotational movement about the axis of a shaft and linear movement in an axial direction can be restrained by using elastic deformation of a ring-shaped body.

In the strain wave gearing 1 according to the present example as described above, the brake mechanism 5 (100, 100A) is incorporated into an empty space inside the externally toothed gear 3 of the strain wave gearing 1. In cases in which the strain wave gearing 1 is linked to a motor to constitute an actuator, it is not necessary to ensure an installation space in the direction of the axis 1a in order to install the brake mechanism 5 (100, 100A). Thus, it is possible to realize an actuator equipped with a flat short-axial-length brake.

Additionally, because the brake mechanism 5 (100, 100A) is fixed to the externally toothed gear 3, and the rotating shaft 60 of the brake mechanism 5 (100, 100A) is linked to the plug 43 of the wave generator 4 via the splined slide guide part 64 (64A), it is easy to assemble the brake mechanism 5 (100, 100A).

Furthermore, the sealing cap 67 (190, 190A) is provided to the slide guide part 64 (64A) of the brake mechanism 5 (100, 100A). The space between the friction disc 55 (rotating disc 130, 130A) and the fixed disc 56 (120, 120A) is closed by the oil seals 66 (171, 172; 171A, 172A). This makes it possible to prevent the brake mechanism 5 (100, 100A) from being isolated from a strain-wave-gearing-body-side site, to prevent lubricant or other foreign matter from entering the brake mechanism 5 (100, 100A), and to prevent a malfunction or the like from occurring.

## Claims

1. A strain wave gearing comprising:
a rigid internally toothed gear;
a flexible externally toothed gear that is coaxially disposed inside the internally toothed gear;
a wave generator that is coaxially disposed inside the externally toothed gear; and
a brake mechanism that is disposed inside the externally toothed gear, the brake mechanism constraining or preventing rotation of the wave generator.

2. The strain wave gearing according to claim 1,
wherein
the brake mechanism is an electromagnetic brake or a fluid brake.

3. The strain wave gearing according to claim 1,
wherein
the brake mechanism is provided with:
a fixed disc that is fixed to the externally toothed gear; and
a rotating disc that is attached to the wave generator so as to rotate integrally therewith and so as to be capable of sliding in a direction of an axis.

4. The strain wave gearing according to claim 3,
wherein
the rotating disc is attached to the wave generator via a splined slide guide part or via a slide guide part having a configuration in which rolling elements are inserted into an axial-direction raceway groove.

5. The strain wave gearing according to claim 4, further comprising:
a sealing member that is attached to the brake mechanism so that foreign matter does not enter the slide guide part or a space between the fixed disc and the rotating disc from the outside.

6. The strain wave gearing according to claim 1,
wherein
the externally toothed gear is provided with: a cylindrical barrel part that is capable of flexing in a radial direction; external teeth that are formed on an outer peripheral surface of the cylindrical barrel part; a diaphragm that extends radially inward from one end of the cylindrical barrel part; and a rigid boss that is formed integrally with an inner peripheral edge of the diaphragm,
the wave generator is provided with a rigid plug and a wave plug that is mounted on a non-circular outer peripheral surface of the plug,
the brake mechanism is incorporated inside the cylindrical barrel part at a location between the plug of the wave generator and the diaphragm and boss, the plug facing the diaphragm and boss from a direction of an axis; and
the brake mechanism is an electromagnetic brake or an MR fluid brake.

7. The strain wave gearing according to claim 6,
wherein
the brake mechanism is provided with:
a fixed disc that is fixed to the boss;
a rotating shaft that is fixed to the plug;
a rotating disc that is attached to the rotating shaft via a slide guide part so as to rotate integrally with the rotating shaft and slide in the direction of the axis; and
a sealing member that prevents foreign matter from entering the slide guide part or a space between the fixed disc and the rotating disc from the outside.
